(19) Europäisches Patentamt / European Patent Office / Office européen des brevets

(11) **EP 3 488 416 B1**

(12) **EUROPEAN PATENT SPECIFICATION**

(45) Date of publication and mention of the grant of the patent:
**13.05.2020 Bulletin 2020/20**

(21) Application number: **17752161.4**

(22) Date of filing: **18.07.2017**

(51) Int Cl.:
*G06T 7/11* (2017.01)

(86) International application number:
**PCT/GB2017/052103**

(87) International publication number:
**WO 2018/020217 (01.02.2018 Gazette 2018/05)**

(54) **METHOD AND APPARATUS FOR SEED POINT DETERMINATION**

VERFAHREN UND VORRICHTUNG ZUR SAATPUNKTBESTIMMUNG

PROCÉDÉ ET APPAREIL DE DÉTERMINATION DE POINT DE DÉPART

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2016 GB 201612855**

(43) Date of publication of application:
**29.05.2019 Bulletin 2019/22**

(73) Proprietor: **Phase Focus Limited**
**London EC2V 7AW (GB)**

(72) Inventor: **LANGLEY, Kevin Robert**
**Sheffield S6 1JH (GB)**

(74) Representative: **HGF Limited**
**4th Floor**
**Merchant Exchange**
**17-19 Whitworth Street West**
**Manchester M1 5WG (GB)**

(56) References cited:
- CIRESAN DAN C ET AL: "Mitosis Detection in Breast Cancer Histology Images with Deep Neural Networks", 22 September 2013 (2013-09-22), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 411 - 418, XP047042095, ISSN: 0302-9743 ISBN: 978-3-642-25366-9 page 413, paragraph 4 - page 414, paragraph 2; figure 1
- XIE YUANPU ET AL: "Deep Voting: A Robust Approach Toward Nucleus Localization in Microscopy Images", 18 November 2015 (2015-11-18), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 374 - 382, XP047337285, ISSN: 0302-9743 ISBN: 978-3-642-25366-9 [retrieved on 2015-11-18] sections 2.2 and 2.3; page 378
- XING FUYONG ET AL: "Automatic Ki-67 Counting Using Robust Cell Detection and Online Dictionary Learning", IEEE TRANSACTIONS ON BIOMEDICAL ENGINEERING, IEEE SERVICE CENTER, PISCATAWAY, NJ, USA, vol. 61, no. 3, 1 March 2014 (2014-03-01), pages 859-870, XP011539893, ISSN: 0018-9294, DOI: 10.1109/TBME.2013.2291703 [retrieved on 2014-02-14]
- FUYONG XING ET AL: "Robust Nucleus/Cell Detection and Segmentation in Digital Pathology and Microscopy Images: A Comprehensive Review", IEEE REVIEWS IN BIOMEDICAL ENGINEERING, vol. 9, 6 January 2016 (2016-01-06), pages 234-263, XP055403037, USA ISSN: 1937-3333, DOI: 10.1109/RBME.2016.2515127
- LOY G ET AL: "Fast radial symmetry for detecting points of interest", IEEE TRANSACTIONS ON PATTERN ANALYSIS AND MACHINE INTELLIGENCE, IEEE COMPUTER SOCIETY, USA, vol. 25, no. 8, 1 August 2003 (2003-08-01), pages 959-973, XP011099376, ISSN: 0162-8828, DOI: 10.1109/TPAMI.2003.1217601

**Description**

Background

It is sometimes desired to segment an image. Segmenting an image manually may be very difficult, or even virtually impossible, where the image includes large numbers of features to be segmented. An example is an image of biological cells may contain thousands of cells which would be extremely time consuming to manually segment.

Methods of automatically segmenting images have been devised. In order to automatically segment an image some methods require an identification of seed points within the image. A seed point is associated with a feature of interest and provides a starting point for segmenting that feature from other features, such as cells, within the image. To be most effective, segmentation typically requires exactly one seed point per feature of interest. It will be appreciated that seed point identification may be useful in other situations than segmentation. However accurate determination of seed points may be problematic, particularly where the features in the image are widely varying in, for example, shape.

Mitosis Detection in Brest Cancer Histology Images with Deep Neural Networks, 22 September 2013, Network and Parallel Computing, Pages 411-418 discloses the use of neural networks to detect mitosis in brest histology images.

"Deep Voting: A Robust Approach Toward Nucleus Localization in Microscopy Images", 18 November 2015, Network and Parallel Computing, Pages 374-382 discloses a convolutional neural network based hugh voting method to localised nucleus centroids in microscopy images.

"Automatic Ki-67 Counting Using Robust Cell Detection and Online Dictionary Learning", IEEE Transactions on Biomedical Engineering Vol. 61, no. 3, 1 March 2014 discloses an integrated learning-based framework for accurate automatic Ki-67 counting.

It is an object of embodiments of the invention to at least mitigate one or more of the problems of the prior art.

Statements of Invention

According to aspects of the present invention, there is provided methods and apparatus as set forth in the appended claims.

According to an aspect of the present invention, there is provided a method of processing image data for determining seed points with respect to the image data for automatically segmenting the image data, comprising determining a voting map, wherein said voting map is based on voting locations determined for at least some pixels within the image data, each pixel of the voting map having a value indicative of a number of votes for that location in the voting map corresponding to a centre of a feature in the image data, determining a density map, wherein determining said density map comprises determining a weighting for at least some pixels within the voting map, wherein the weighting is determined as a non-linear function based on a value of each of the at least some pixels of the voting map and determining the seed points in the image data based on the density map; wherein the determining the seed points comprises determining local maxima in the density map, determining whether a pixel path exists between first and second local maxima in the density map, the pixels in the pixel path having values above a seed threshold, eliminating a lower of the first and second local maxima if said path exists, determining the seed points as remaining local maxima.

According to an aspect of the present invention, there is provided an apparatus, comprising a memory for storing data therein, a processor, wherein the processor is arranged, in use, to perform a method of processing image data for determining seed points with respect to the image data for automatically segmenting the image data comprising the steps of determining a voting map, wherein said voting map is based on voting locations determined for at least some pixels within image data stored in the memory, each pixel of the voting map having a value indicative of a number of votes for that location in the voting map corresponding to a centre of a feature in the image data, determining a density map, wherein determining said density map comprises determining a weighting for at least some pixels within the voting map, wherein the weighting is determined as a non-linear function based on a value of each of the at least some pixels of the voting map and determining the seed points in the image data based on the density map; wherein the determining the seed points comprises determining local maxima in the density map, determining whether a pixel path exists between first and second local maxima in the density map, the pixels in the pixel path having values above a seed threshold, eliminating a lower of the first and second local maxima if said path exists, determining the seed points as remaining local maxima .

Brief Description of the Drawings

Embodiments of the invention will now be described by way of example only, with reference to the accompanying figures, in which:

Figure 1 shows an image of biological cells;

Figure 2 shows a method of determining seed points according to an embodiment of the invention;

Figure 3 shows a further method of determining a voting map according to an embodiment of the invention;

Figure 4 shows an illustration of a feature of a vote according to an embodiment of the invention; and

Figure 5 shows an illustration of a density map according to an embodiment of the invention;

Figure 6 shows an illustration of potential seed points according to an embodiment of the invention;

Figure 7 illustrates an apparatus according to an embodiment of the invention; and

Figure 8 is a graph illustrating performance of an embodiment of the invention.

Detailed Description of Embodiments of the Invention

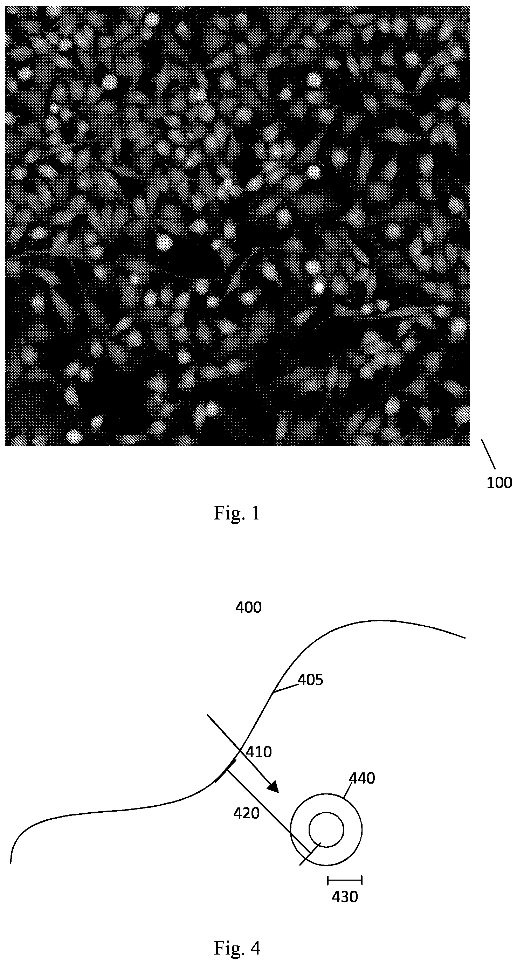

Embodiments of the present invention determine one or more seed points in an image. The image may comprise one, or more often, a plurality of features. The features may have a degree of similarity, such as biological cells. It will, however, be appreciated that embodiments of the present invention are not restricted to being utilised with images of cells. Figure 1 shows an example image 100 including a plurality of features, which in this example are cells.

The image is formed by a plurality of pixels, such as arranged in a grid arrangement. The image may be formed by image data comprising $m$ x $n$ pixels with each pixel having one or more associated values, such as colour values i.e. RGB. The image may be a greyscale image i.e. where each pixel has only one value indicative of luminance or brightness. Each pixel may assume a value between predetermined minimum and maximum values, such as 0 and 255 although other values may be used. The value of each pixel may be indicative of an amount of radiation (such as although not exclusively visible light) reflected by, or transmitted through, the features present in the image.

In some embodiments of the invention the image is a phase image. In such a phase image a value of each pixel is indicative of a phase change imparted by a portion of a feature at the location corresponding to the pixel. Methods of determining phase images may be known as ptychographic methods. The method of determining the phase image may be a process performed on data provided by a detector, wherein the process may be an iterative phase-determination process. Example methods of determining phase images are disclosed in WO 2005/106531 and WO 2010/06405 1. It will be appreciated that other methods for determining phase images are known and embodiments of the present invention are not limited to the method by which the phase image is produced. The example image in Figure 1 is a phase image.

The image data may be based upon data output by an imaging device, such as a camera or a charge-coupled device (CCD), comprising a plurality of pixels which each output a portion of the image data. Other imaging devices may be used. The data output by the imaging device may be processed, such as described above, to determine the phase image.

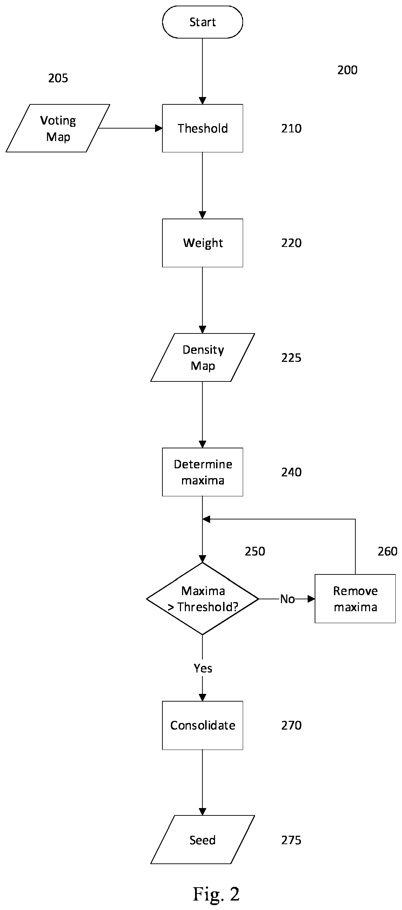

Figure 2 illustrates a method 200 of determining seed points within an image according to an embodiment of the invention.

An input to the method 200 is a voting map 205. The voting map 205 is based on the image. The voting map 205 may have dimensions corresponding to the image on which it is based i.e. an equal number of pixels. That is, the voting map may comprise $m$ x $n$ pixels. Each pixel of the voting map 205 has a value indicative of a number of votes for that location in the voting map corresponding to a centre of a feature in the image. The voting map is a map of voting locations. A location of each vote in the map is indicative of a corresponding pixel's estimate of the centre of the feature corresponding to the pixel. That is, each vote is a corresponding pixel's vote for the centre of the feature with which the pixel is associated. In the case that each feature is circular and has a radius which is known *a priori,* the votes should correspond to the centre of the feature, such as the centre of the cell. However where the features have varying or irregular shapes and/or sizes, the voting map 205 may comprise votes indicative of a plurality of centres for at least some features.

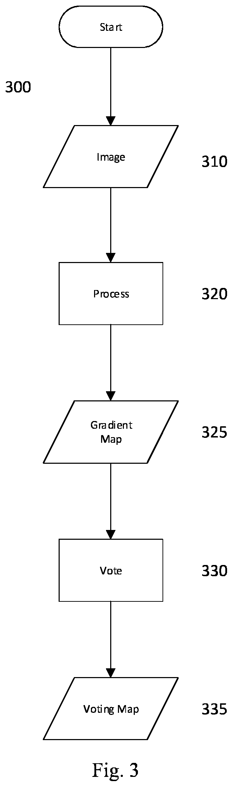

Before describing the method 200 further, a method 300 of determining the voting map 205 according to an aspect of the present invention will be described with reference to Figure 3. It will be appreciated that other methods of determining the voting map 205 may be envisaged.

In step 310 an image is provided. As noted above, in some embodiments, the image may be provided from a detector, such as a pixelated detector, for example a CCD, recording an intensity of radiation falling on the detector from one or more objects irradiated with radiation. In some embodiments, prior to the method 300 the image may be generated, such as according to a ptychographic or other phase determination method or process, or the image may be output by the detector and provided to the method 300.

The one or more objects may be retained during imaging by a retainment means such as a microscope slide, although it will be appreciated that other arrangements of retainment means or retainment device may be used.

As discussed above, the image comprises a plurality of pixels each having at least one value which may correspond to an intensity of radiation falling a corresponding pixel of the detector. However, in other embodiments, the image may be a phase image where the value of each pixel is indicative of a phase change imparted to radiation by a portion of each feature corresponding to the respective pixel. In step 310 the image may be received from the detector or stored in a memory.

In step 320 the image is processed to provide a gradient map 325. Step 320 may comprise flatting the image. Step 320 may comprise one or both of smoothing and blurring the image. The image may be flatted by application of a background subtraction algorithm, such as a rolling ball algorithm, although other image flattening techniques may be used. Such a background subtraction algorithm may be particularly useful when background values of the image vary across the image. The flattened image has a background with more uniform values. The image may be smoothed by application of a filter, such as a Gaussian filter. The smoothing removes or reduces noise present in the image.

In step 320 the gradient map 325 is determined. The gradient map 325 may be determined by application of one or more Sobel filters to the image, although other methods may be used to determine the gradient map 325. The gradient map 325 is indicative of directional changes in pixel values of the image, where the pixel values may be indicative of intensity or phase, as discussed above. Each pixel may be associated with at least one value indicative of a local direction of the gradient. In some embodiments, each pixel of the image may be associated with a vector indicative of the direction and a magnitude of the gradient at the respective pixel location in the image. In some embodiments, a first filter may be used to determine a gradient in a corresponding first direction and a second filter may be used to determine a gradient in a corresponding second direction. The first direction may be horizontal and the second direction may be vertical. Based on an output of the first and second filters a gradient magnitude and direction is determined for each pixel in the image. Thus, as a result of step 320, the gradient map 325 is determined.

In step 330 a voting process is performed to determine a voting map 335. In step 330 at least some pixels in the image 'vote' on the location of a seed point. In some embodiments, every pixel in the image votes on the location of a seed point, although it will be realised that this is not necessary in every embodiment. The pixels vote for the location of the seed point for the feature with which the pixel is associated in the image.

Figure 4 illustrates an example portion of image data 400 indicative of an edge 405 or peripheral boundary of a feature such as a cell. For a pixel in the image data 400 the gradient map 325 indicates a direction 410 of the local gradient at the pixel. A predetermined constant $R_E$ 420 is used indicative of an estimated distance between the edge 405 and a centre of the feature, which may be an estimated radius of the feature where the feature is expected to be circular. The estimated distance $R_E$ 420 is used to determine a distance 420 between the pixel and a location of the pixel's vote 440. The distance $R_E$ 420 may be determined before the method 300 is performed, such as based on a user's input. In some embodiments the vote is determined as a vote distribution having a magnitude and variance. The magnitude of the vote distribution may be based upon the magnitude of the gradient for the pixel in the image data. The variance may be based on a predetermined variance $V_E$ 430, as illustrated in Figure 4, such as may be input by a user prior to the method. The vote distribution may be a Gaussian distribution in embodiments of the method 300, although it will be appreciated that other distributions may be used. In some embodiments the variance $V_E$ 430 may be a predetermined number of pixels, such as 3 although other values may be used. Thus, for every pixel in the image for which a vote is determined, a corresponding distribution is located with respect to the pixel having a magnitude and variance indicative of that pixel's vote for the centre of the respective feature.

In the voting map 335 the votes from all of the pixels may be summed. Thus pixels in the voting map 335 are associated with a sum of magnitudes corresponding to a plurality of votes. The voting map 335 may have a size, such as $m$ x $n$ pixels, corresponding to the image data, or may be cropped in step 330 to the size of the image data. The voting map 335 may be provided as an input 205 to the method illustrated in Figure 2.

Where the features in the image data are uniformly circular and have a radius corresponding to the estimated radius $R_E$, the voting map 335 may reliably indicate the centre of features in the image data. However, where the image contains features of one or both of varying sizes and shape, the voting map 335 may comprise more than one peak associated with each feature.

Referring again to Figure 2, the method 200 comprises a step 210 of applying a voting threshold to the voting map 205. The voting threshold eliminates or removes any votes in the voting map 205 having values below the voting threshold. In some embodiments, each pixel in the voting map is assigned a weighting. Pixels having a number of votes below the voting threshold may be weighted by a low value, such as 0, thereby eliminating them from further consideration. The voting threshold may be a predetermined value. However in other embodiments of the invention the voting threshold is based upon a number of votes in the voting map 205, or a magnitude of votes in the voting map 205. In some embodiments, the voting threshold is based upon an average number of votes per pixel in the voting map 205. In some embodiments the voting threshold (*voting threshold*) is determined as:

$$voting\_threshold = \frac{mean(votes)}{I}$$

where mean(votes) is a mean number of votes per pixel of the voting map 205 and $I$ has a value of between a predetermined minimum and maximum values. In some embodimens the minimum value is 1. The minimum and maximum may be between 5 and 15 in some embodiments. In some embodiments $I$ has a value of 10, although other values may be used.

In step 220 a weighting is applied to at least some pixels in the voting map 205. The weighting may be applied, in some embodiments, to those pixels not eliminated in step 210, such as by already being assigned a weight of 0. The weighting is determined as a non-linear function based on a value of the pixel. In some embodiments of the invention the weighting may be determined as:

$$weighting = \left\lfloor \sqrt{\frac{voting\_value}{voting\_threshold}} \right\rfloor$$

where *voting_value* is a vote value for a pixel. It will be appreciated that ⌊ ⌋ denotes a "floor" function determining a greatest integer that is less than or equal to x (rounding towards -∞). As a result of step 220 a weighted voting map is determined.

A density map 225 is determined based on the weighted voting map. The density map 225 is determined by storing in the density map 225 a distribution for each weighted vote in the weighted voting map. A magnitude of each distribution is based upon the weighted vote value for each pixel in the weighted voting map. In some embodiments, the magnitude of the distribution is equal to the weighted vote value for the corresponding pixel. The distribution is centred in the density map 225 at the location of the pixel in the weighted voting map. A variance of the distribution may be based upon the constant $R_E$ 420 which, as noted above, is indicative of an estimated distance between the edge 405 and the centre of the feature, which is an estimated radius of the feature where the feature is expected to be circular. In some embodiments the variance may be determined as:

$$variance = \frac{R_E}{C}$$

where C is a constant which, in some embodiments, may be up to 5 or may be selected as 3, although other values may be used. The distribution may be a Gaussian distribution in embodiments of the method 300, although it will be appreciated that other distributions may be used.

Density values arising from each weighted vote in the weighted voting map are summed in the density map 225. That is, a density value for each pixel in the density map 225 may correspond to a sum of density values arising from a plurality of pixels in the weighted voting map.

In step 240 local maxima in the density map 225 are determined. The local maxima are determined in step 240 by identifying in the density map 225 pixels having a largest value within a predetermined pixel range. The one or more local maxima may be stored in a data structure, such as a maxima list.

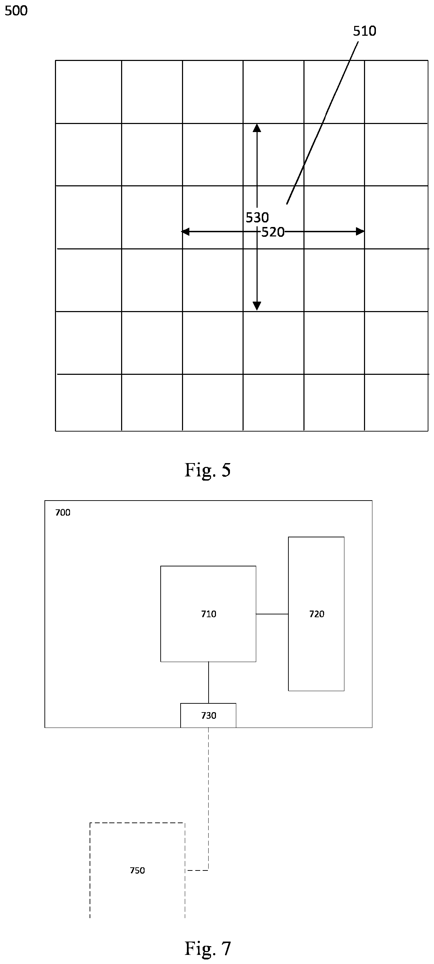

Figure 5 illustrates a portion of density map 500 which is formed by a plurality of pixels arranged in columns and rows, as will be appreciated. For a pixel 510 of the density map 500 the density value of the pixel 510 is compared against density values of neighbouring pixels within the pixel range 520, 530. In Figure 5 the pixel range is illustrated as being a predetermined number of pixels horizontally 520 and vertically 530. In some embodiments, such as illustrated in Figure 5, the number of horizontal pixels 520 is equal to the number of vertical pixels 530. The pixel range 520, 530 may be three pixels horizontally and vertically 520, 530 although it will be appreciated that the pixel range may be different in other embodiments. Thus the density value of pixel 510 is compared against the eight values of surrounding pixels within the pixel range 520, 530. The pixel 510 is determined to be a local maximum if it has a density value greater than all of the pixels within the pixel range 520, 530. Whilst the neighbouring pixels in Figure 5 are square shaped, it will be realised that in other embodiments the shape may be otherwise shaped, such as by considering neighbouring pixels within a predetermined pixel radius of the pixel 510. The local maximum is found for each pixel in the density map 225. Thus as a result of step 240 some pixels of the density map are identified as being local maxima in the density map 225.

In step 250 it is determined whether the local maxima values determined in step 240 are greater than a maxima threshold value. If, in step 250 a value of a local maximum is less than or equal to the maxima threshold, it is removed, i.e. eliminated from further consideration, in step 260. Step 250 is repeated for each local maximum value identified in step 240. Thus, as a result of steps 250 and 260, only local maxima with values greater than the maxima threshold remain under consideration. In some embodiments, only local maxima with values greater than the maxima threshold remain in the maxima list determined in 240. The output of step 250 may be used as seed points for the image. However, for some features in the image, two or more seed points may be associated with each feature. That is, some features in the image may be associated with a plurality of seed points corresponding to more than one local maxima above the maxima threshold. This particular occurs when the features have a range of size and shapes, such as for naturally occurring features.

In order to ameliorate the problem of multiple seed points per feature, in step 270 the potential seed points are consolidated in step 270. The potential seed points are consolidated by reducing a number of potential seed points per feature. In embodiments of the invention, potential seed points are removed based upon a continuity of pixels in the density map 225 between potential seed points having density values above a seed threshold 650.

The potential seed points may be stored in a data structure, such as a list, according to the density value of each potential seed point. That is, the list in some embodiments may be ordered according to the density value of each potential seed point.

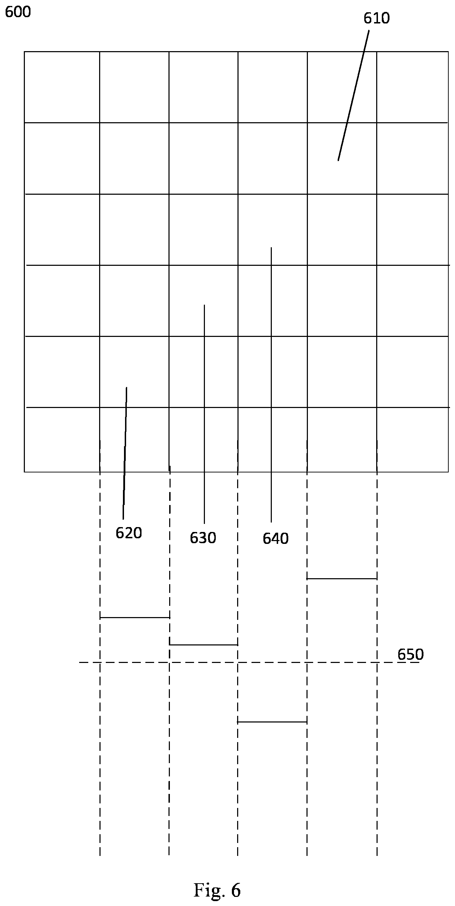

Figure 6 illustrates a portion of a density map 600 for which potential seed points have been identified in steps 240-260 associated with two pixels 610, 620. In other words, pixels 610, 620 have been identified as local maxima of density values. Line 650 represents the seed threshold. Step 270 of the method 200 consolidates the potential seed points 610, 620 by determining if a path exists in the density map 600 between the two pixels 610, 620 associated with potential seed points. The path is determined to exist if a continuum of other pixels is located between the two pixels 610, 620 having density values above the seed threshold 650. For example, a third pixel 630 is adjacent to the second pixel 620 having a density value above the seed threshold 650, as illustrated in Figure 6. It will be observed that the density value of third pixel 630 is lower than that of the second pixel 620, but above threshold 650. A fourth pixel 640 exists between the third and first pixels 630, 610 having a density value below the seed threshold 650. Thus the fourth pixel 640 represents a break in the path between the first and second pixels 610, 620. It will be appreciated that in embodiments of the invention, the path may only be formed by horizontal and vertically adjacent pixels, whilst in other embodiments the path may be formed including diagonally-adjacent pixels. If a path exists between the potential seed points associated with the first and second pixels, 610, 620 then the potential seed point having the lowest density value i.e. second pixel 620, is removed from the data structure thereby consolidating the potential seed points. The value of the seed threshold 650 may be determined based upon one or both of the density values associated with potential seed points 610, 620. In one embodiment, the seed threshold 650 value may be determined based upon a density value of the larger of the potential seed points i.e. density value of first pixel 610. The seed threshold 650 value be determined as a proportion or percentage of the larger of density values associated with the potential seed points i.e. the first pixel 610.

In embodiments of the invention the consolidation in step 270 may be performed by selecting a first potential seed point in the data structure or list, such as the potential seed point associated with pixel 610. The first potential seed point may be a seed point having a greatest density value. The seed threshold 650 may be set based on a value of the selected seed point's density, such as 50%, 60% or 70% of the density value of the potential seed point, although other values or percentages may be used. A flood-fill is then performed using pixels in the density map having a value less than the seed threshold 650 as walls or barriers to restrain the flood fill. If pixels associated with other potential seed points in the list are encapsulated within the fill, then the potential seed points associated with these pixels are removed from the list. That is, if it is determined that a path exists between the first potential seed point 610 and pixels associated with other potential seed points within the flood-filled area, then the pixels associated with the other seed points are removed from the data structure. By repeating for all the potential seed points in the data structure the number of potential seed points is consolidated in step 270.

As a result of step 270 (and preceding steps) seed points are output from the method 200 indicative of seed points associated with features in the image.

Figure 7 illustrates an apparatus 700 according to an embodiment of the invention. The apparatus 700 may be arranged to perform a method according to an embodiment of the invention, such as the method 200 illustrated in and described with reference to Figure 2.

The apparatus comprises a processing means in the form of a processing unit 710. The processing unit 710 is communicably coupled to a memory 720. The processing means 710 may comprise one or more processing devices which operatively execute software instructions. The software instructions case the processing means 710 to perform a method such as the method 200. The software instructions may be stored in a computer readable medium, such as in the memory 720.

The apparatus 700 comprises an interface means which may be an interface unit 720 for operatively receiving data. The interface unit 720 is arranged to receive one or both of image data corresponding to the image or the voting map 205. The image data may be provided from a detector 750 in some embodiments, as illustrated in dotted lines in Figure 7. Alternatively the image data may be received via a communications network, such as an IP-based network for example over the Internet, although other communication network technologies may be used. Particularly, although not exclusively, where the image is a phase image, the phase image may be received from another computing device (not shown) arranged to perform a method of phase determination, such as disclosed in WO 2005/106531 or WO 2010/064051, although embodiments of the invention are not limited in this respect. The image data and/or voting map may be stored in the memory 720.

Testing of an embodiment of the present invention against a prior art method of seed point determination, and the results are provided in the table below.

|  | Prior Art | Present Invention |
|---|---|---|
| Per Cell | 88.3% | 96.3% |
| Per Image | 89.8% | 97.7% |

It will be understood that "per cell" is a percentage of cells correctly detected of a plurality of images tested containing 1857 cells, whilst "per image" is a mean detection rate over 21 images studied. Thus it can be appreciated that embodiments of the present invention provide improved determination of seed points for features within images.

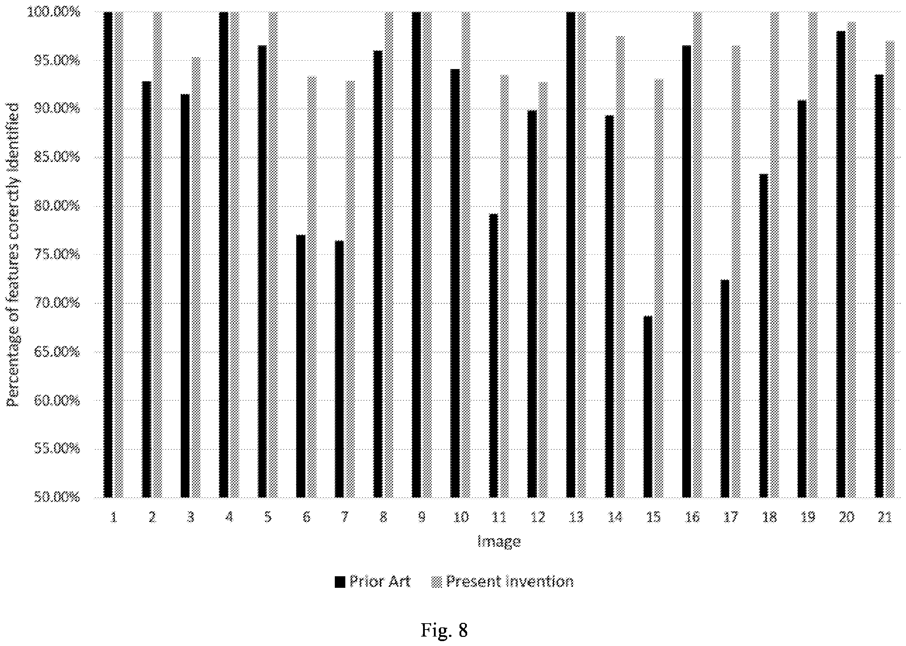

Figure 8 illustrates a performance of an embodiment of the invention in relation to a prior art method for 21 images. As can be appreciated, whilst a relative performance of the embodiment of invention in relation to a small number of images is equal, for most images the performance of the embodiment of the invention exceeds that of the prior art method.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

The invention is not restricted to the details of any foregoing embodiments. The claims should not be construed to cover merely the foregoing embodiments, but also any embodiments which fall within the scope of the claims.

## Claims

1. A computer-implemented method of processing image data for determining seed points with respect to the image data for automatically segmenting the image data, comprising:

   determining a voting map, wherein said voting map is based on voting locations determined for at least some pixels within the image data, each pixel of the voting map having a value indicative of a number of votes for that location in the voting map corresponding to a centre of a feature in the image data;
   determining a density map, wherein determining said density map comprises determining a weighting for at least some pixels within the voting map, wherein the weighting is determined as a non-linear function based on a value of each of the at least some pixels of the voting map; and
   determining the seed points in the image data based on the density map, wherein the determining the seed points comprises determining local maxima in the density map, determining whether a pixel path exists between first and second local maxima in the density map, the pixels in the pixel path having values above a seed threshold, eliminating a lower of the first and second local maxima if said path exists, determining the seed points as remaining local maxima.

2. The method of any preceding claim, wherein the weighting value for the at least some pixels within the voting map is determined is based upon the value of the corresponding pixel of the voting map and a voting threshold.

3. The method of claim 2, wherein the weighting value for the at least some pixels within the voting map is based upon a square root of a ratio between the value of the corresponding pixel of the voting map and the voting threshold.

4. The method of claim 2 or 3, wherein the weighting value for the at least some pixels within the voting map is

determined as:

$$weighting = \left\lfloor \sqrt{\frac{voting\_value}{voting\_threshold}} \right\rfloor$$

where *voting_value* is the voting value for the pixel in the density map and *voting_threshold* is the voting threshold.

5. The method of claim 2 or any claim depending thereon, comprising eliminating voting values in the voting map less than the voting threshold value; optionally the voting threshold value is based upon an average number of votes for each pixel in the voting map.

6. The method of claim 5, wherein the voting threshold value is determined as:

$$voting\_threshold = \frac{mean(votes)}{I}$$

wherein *mean(votes)* is a mean number of votes per pixel of the voting map and *I* is a value; optionally *I* has a value of between 5 and 15.

7. The method of claim 5 or 6, wherein the eliminating voting values in the voting map comprises weighting the voting values to a predetermined value; optionally the predetermined value is 0.

8. The method of any preceeding claim, wherein the determining the local maxima comprises selecting a pixel of the density map and determining whether a value of the pixel is a greatest value of pixels within a pixel range.

9. The method of claim 8, wherein:
the pixel range is a first number of pixels surrounding the selected pixel; and/or the method comprises selecting the pixel of the density map as a local maxima if said pixel has a greater value than all pixels within the pixel range.

10. The method of any preceding claim, wherein the seed threshold is based on a value of one or both of the first and second local maxima.

11. The method of claim 10, wherein the seed threshold is based upon a greatest value of the first and second local maxima; optionally the seed threshold is a predetermined percentage of the greatest value of the first and second local maxima.

12. The method of any preceding claim, wherein the image data comprises value indicative of phase.

13. An apparatus, comprising:

a memory for storing data therein;
a processor, wherein the processor is arranged, in use, to perform a method of processing image data for determining seed points with respect to the image data for automatically segmenting the image data, the method comprising the steps of:

determining a voting map, wherein said voting map is based on voting locations determined for at least some pixels within image data stored in the memory, each pixel of the voting map having a value indicative of a number of votes for that location in the voting map corresponding to a centre of a feature in the image data; determining a density map, wherein determining said density map comprises determining a weighting for at least some pixels within the voting map, wherein the weighting is determined as a non-linear function based on a value of each of the at least some pixels of the voting map; and determining the seed points in the image data based on the density map, wherein the determining the seed points comprises determining local maxima in the density map, determining whether a pixel path exists between first and second local maxima in the density map, the pixels in the pixel path having values above a seed threshold, eliminating a lower of the first and second local maxima if said path exists, determining the seed points as remaining local maxima.

14. The apparatus of claim 13, wherein the image data is based upon data output by an imaging device.

15. Computer software which, when executed by a computer, is arranged to perform a method according to any of claims 1 to 12; optionally the computer software is stored on a computer readable medium.

**Patentansprüche**

1. Computerimplementiertes Verfahren zum Verarbeiten von Bilddaten zum Bestimmen von Saatpunkten bezüglich der Bilddaten zum automatischen Segmentieren der Bilddaten, umfassend:

ein Bestimmen einer Abstimmungskarte, wobei die Abstimmungskarte auf Abstimmungsstandorten basiert, die für mindestens einige Pixel in den Bilddaten bestimmt wird, wobei jedes Pixel der Abstimmungskarte einen Wert aufweist, der eine Anzahl von Abstimmungen für diesen Standort in der Abstimmungskarte entsprechend einem Zentrum eines Merkmals in den Bilddaten anzeigt;
ein Bestimmen einer Dichtekarte, wobei das Bestimmen der Dichtekarte ein Bestimmen einer Gewichtung für mindestens einige Pixel in der Abstimmungskarte umfasst, wobei die Gewichtung als eine nichtlineare Funktion basierend auf einem Wert jedes der mindestens einigen Pixel der Abstimmungskarte bestimmt wird; und
ein Bestimmen der Saatpunkte in den Bilddaten basierend auf der Dichtekarte, wobei das Bestimmen der Saatpunkte ein Bestimmen lokaler Maxima in der Dichtekarte, ein Bestimmen, ob ein Pixelpfad zwischen ersten und zweiten lokalen Maxima in der Dichtekarte existiert, wobei die Pixel im Pixelpfad Werte über einem Saatschwellwert haben, ein Eliminieren eines unteren der ersten und zweiten lokalen Maxima, wenn der Pfad existiert, ein Bestimmen der Saatpunkte als verbleibende lokale Maxima umfasst.

2. Verfahren nach einem der vorangehenden Ansprüche, wobei der Gewichtungswert für die mindestens einigen Pixel in der Abstimmungskarte basierend auf dem Wert des entsprechenden Pixels der Abstimmungskarte und einem Abstimmungsschwellwert bestimmt wird.

3. Verfahren nach Anspruch 2, wobei der Gewichtungswert für die mindestens einigen Pixel in der Abstimmungskarte auf einer Quadratwurzel eines Verhältnisses zwischen dem Wert des entsprechenden Pixels der Abstimmungskarte und einen Abstimmungsschwellwert basiert.

4. Verfahren nach Anspruch 2 oder 3, wobei der Gewichtungswert für die mindestens einigen Pixel in er Abstimmungskarte bestimmt wird als:

$$Gewichtung = \left\lfloor \sqrt{\frac{Abstimmungswert}{Abstimmungsschwellwert}} \right\rfloor$$

wobei *Abstimmungswert* der Abstimmungswert für das Pixel in der Dichtekarte ist und *Abstimmungsschwellwert* der Abstimmungsschwellwert ist.

5. Verfahren nach Anspruch 2 oder einem davon abhängigen Anspruch, umfassend ein Eliminieren von Abstimmungswerten in der Abstimmungskarte, die kleiner als der Abstimmungsschwellwert sind; wobei der Abstimmungsschwellwert optional auf einer durchschnittlichen Anzahl von Abstimmungen für jedes Pixel in der Abstimmungskarte basiert.

6. Verfahren nach Anspruch 5, wobei der Abstimmungsschwellwert bestimmt wird als:

$$Abstimmungsschwellwert = \frac{durchschnittliche\ (Abstimmungen)}{I}$$

wobei *durchschnittliche(Abstimmungen)* eine durchschnittliche Anzahl von Abstimmungen je Pixel der Abstimmungskarte ist und *I* ein Wert ist; *I* optional einen Wert von zwischen 5 und 15 aufweist.

7. Verfahren nach Anspruch 5 oder 6, wobei das Eliminieren von Abstimmungswerten in der Abstimmungskarte ein Gewichten der Abstimmungswerte auf einen vorgegebenen Wert umfasst; optional wobei der vorgegebene Wert 0 ist.

8. Verfahren nach einem der vorangehenden Ansprüche, wobei das Bestimmen der lokalen Maxima ein Auswählen eines Pixels von der Dichtekarte und ein Bestimmen, ob ein Wert ein größter Wert von Pixeln in einem Pixelbereich ist, umfasst.

9. Verfahren nach Anspruch 8, wobei:
der Pixelbereich eine erste Anzahl von Pixeln ist, die das ausgewählte Pixel umgeben; und/oder das Verfahren ein Auswählen des Pixels von der Dichtekarte als ein lokales Maximum umfasst, wenn das Pixel einen größeren Wert als alle Pixel im Pixelbereich aufweist.

10. Verfahren nach einem der vorangehenden Ansprüche, wobei der Saatschwellwert auf einem Wert eines oder beider der ersten und zweiten lokalen Maxima basiert.

11. Verfahren nach Anspruch 10, wobei der Saatschwellwert auf einem größten Wert des ersten und zweiten lokalen Maxima basiert; optional wobei der Saatschwellwert ein vorgegebener Prozentsatz des größten Werts des ersten und zweiten lokalen Maximums ist.

12. Verfahren nach einem der vorangehenden Ansprüche, wobei die Bilddaten Werte umfassen, die eine Phase anzeigen.

13. Vorrichtung, umfassend:

einen Speicher zum Speichern von Daten darin;
einen Prozessor, wobei der Prozessor angeordnet ist, um in Gebrauch ein Verfahren zum Verarbeiten von Bilddaten zum Bestimmen von Saatpunkten bezüglich von Bilddaten zum automatischen Segmentieren der Bilddaten auszuführen, wobei das Verfahren die folgenden Schritte umfasst:

ein Bestimmen einer Abstimmungskarte, wobei die Abstimmungskarte auf Abstimmungsstandorten basiert, die für mindestens einige Pixel in Bilddaten bestimmt wird, die im Speicher gespeichert sind, wobei jedes Pixel der Abstimmungskarte einen Wert aufweist, der eine Anzahl von Abstimmungen für diesen Standort in der Abstimmungskarte entsprechend einem Zentrum eines Merkmals in den Bilddaten anzeigt;
ein Bestimmen einer Dichtekarte, wobei das Bestimmen der Dichtekarte ein Bestimmen einer Gewichtung für mindestens einige Pixel in der Abstimmungskarte umfasst, wobei die Gewichtung als eine nichtlineare Funktion basierend auf einem Wert jedes der mindestens einigen Pixel der Abstimmungskarte bestimmt ist; und
ein Bestimmen der Saatpunkte in den Bilddaten basierend auf der Dichtekarte, wobei das Bestimmen der Saatpunkte ein Bestimmen lokaler Maxima in der Dichtekarte, ein Bestimmen, ob ein Pixelpfad zwischen ersten und zweiten lokalen Maxima in der Dichtekarte existiert, wobei die Pixel im Pixelpfad Werte über einem Saatschwellwert haben, ein Eliminieren eines unteren der ersten und zweiten lokalen Maxima, wenn der Pfad existiert, ein Bestimmen der Saatpunkte als verbleibende lokale Maxima umfasst.

14. Vorrichtung nach Anspruch 13, wobei die Bilddaten auf Daten basieren, die von einer Abbildungsvorrichtung ausgegeben werden.

15. Computersoftware, die, bei Ausführung durch einen Computer, angeordnet ist, um das Verfahren nach einem der Ansprüche 1 bis 12 auszuführen; wobei die Computersoftware optional in einem computerlesbaren Medium gespeichert ist.

**Revendications**

1. Procédé informatique de traitement de données d'image pour la détermination de points-graine relativement aux données d'image pour la segmentation automatique des données d'image, comprenant :

la détermination d'une carte de vote, ladite carte de vote étant basée sur des positions de vote déterminées pour au moins certains pixels dans le cadre des données d'image, chaque pixel de la carte de vote présentant une valeur indiquant le nombre de votes pour cette position dans la carte de vote correspondant à un centre d'une caractéristique dans les données d'image ;

la détermination d'une carte de densité, la détermination de ladite carte de densité comprenant la détermination d'une pondération pour au moins certains des pixels au sein de la carte de vote, la pondération étant déterminée comme une fonction non linéaire basée sur une valeur de chacun des au moins certains pixels de la carte de vote ; et

la détermination de points-graine dans les données d'image sur la base de la carte de densité, la détermination des points-graine comprenant la détermination de maximums locaux dans la carte de densité, la détermination de l'existence d'un chemin de pixels entre des premier et deuxième maximums locaux dans la carte de densité, les pixels dans le chemin de pixels présentant des valeurs supérieures à un seuil de graines, l'élimination du maximum inférieur parmi les premier et deuxième maximums locaux si ledit chemin existe, la détermination des points-graine en tant que maximums locaux restants.

2. Méthode selon une quelconque des revendications précédentes, la valeur de pondération pour les au moins certains pixels dans la carte de vote étant déterminée en fonction de la valeur du pixel correspondant de la carte de vote et d'un seuil de vote.

3. Méthode selon la revendication 2, la valeur de pondération pour les au moins certains pixels au sein de la carte de vote étant basée sur une racine carrée d'un rapport entre la valeur du pixel correspondant de la carte de vote et le seuil de vote.

4. Méthode selon la revendication 2 ou 3, la valeur de pondération pour les au moins certains pixels au sein de la carte de vote étant déterminée de la façon suivante :

$$pondération = \sqrt{\frac{valeur\_de\_vote}{seuil\_de\_vote}}$$

*valeur_de_vote* étant la valeur de vote pour le pixel dans la carte de densité, et *seuil_de_vote* étant le seuil de vote.

5. Méthode selon la revendication 2, ou toute autre revendication tributaire de celle-ci, comprenant des valeurs de vote d'élimination dans la carte de vote, qui sont inférieures à la valeur seuil de vote ;

en option, la valeur seuil de vote étant basée sur un nombre moyen de votes pour chaque pixel dans la carte de vote.

6. Méthode selon la revendication 5, la valeur seuil de vote étant déterminée par l'expression suivante :

$$Seuil\_de\_vote == \frac{moyenne\ (votes)}{I}$$

*moyenne (votes)* étant un nombre moyen de votes par pixel de la carte de vote, et *I* étant une valeur ;

en option, la valeur de *I* étant comprise entre 5 et 15.

7. Méthode selon la revendication 5 ou 6, les valeurs de vote d'élimination dans la carte de vote comprenant la pondération des valeurs de vote à une valeur prédéterminée ;

en option, la valeur prédéterminée étant 0.

8. Méthode selon une quelconque des revendications précédentes, la détermination des maximums locaux comprenant la sélection d'un pixel de la carte de densité, et la détermination si une valeur du pixel est un plus grand nombre de pixels dans une plage de pixels.

9. Méthode selon la revendication 8, dans laquelle :

la plage de pixels est un premier nombre de pixels entourant le pixel sélectionné ; et/ou

la méthode comprenant la sélection du pixel de la carte de densité en tant que maximums locaux, si la valeur dudit pixel est supérieure à celle de tous les pixels dans la plage de pixels.

10. Méthode selon une quelconque des revendications précédentes, le seuil de graines étant basé sur une valeur d'un ou des deux des premier et deuxième maximums locaux.

11. Méthode selon la revendication 10, le seuil de graines étant basé sur une plus grande valeur des premier et deuxième maximums locaux ;
en option, le seuil de graines étant un pourcentage prédéterminé de la plus grande valeur des premier et deuxième maximums locaux.

12. Méthode selon une quelconque des revendications précédentes, les données d'image comprenant une valeur indicative d'une phase.

13. Appareil comprenant :

une mémoire pour le stockage de données dans celui-ci ;
un processeur, le processeur étant agencé pour l'exécution, en cours d'usage, d'une méthode de traitement d'images pour la détermination de points de graine relatifs aux données d'image, pour la segmentation automatique des données d'image, la méthode comprenant les étapes suivantes :

détermination d'une carte de vote, ladite carte de vote étant basée sur des positions de vote déterminées pour au moins certains pixels au sein des données d'image mises en mémoire, chaque pixel de la carte de vote présentant une valeur indicative d'un nombre de votes pour cette position dans la carte de vote correspondant à un centre d'une caractéristique des données d'image ;
détermination d'une carte de densité, la détermination de ladite carte de densité comprenant la détermination d'une pondération pour au moins certains des pixels au sein de la carte de vote, la pondération étant déterminée comme une fonction non linéaire basée sur une valeur de chacun des au moins certains pixels de la carte de vote ; et
détermination de points-graine dans les données d'image sur la base de la carte de densité, la détermination des points-graine comprenant la détermination de maximums locaux dans la carte de densité, détermination de l'existence d'un chemin de pixels entre des premier et deuxième maximums locaux dans la carte de densité, les pixels dans le chemin de pixels présentant des valeurs supérieures à un seuil de graines, élimination du maximum inférieur parmi les premier et deuxième maximums locaux si ledit chemin existe, détermination des points-graine en tant que maximums locaux restants.

14. Appareil selon la revendication 13, les données d'image étant basées sur des données produites par un dispositif d'imagerie.

15. Logiciel qui, lorsqu'il est exécuté par un ordinateur, est agencé pour l'exécution d'une méthode selon une quelconque des revendications 1 à 12 ;
en option le logiciel étant stocké sur un support lisible par ordinateur.

100

Fig. 1

400

405

410

440

420

430

Fig. 4

Fig. 2

300

Start

Image 310

Process 320

Gradient Map 325

Vote 330

Voting Map 335

Fig. 3

500

510

530
520

Fig. 5

700

710

720

730

750

Fig. 7

600

610

620

630

640

650

Fig. 6

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005106531 A

- WO 2010064051 A

**Non-patent literature cited in the description**

- Mitosis Detection in Brest Cancer Histology Images with Deep Neural Networks. *Network and Parallel Computing,* 22 September 2013, 411-418
- Deep Voting: A Robust Approach Toward Nucleus Localization in Microscopy Images. *Network and Parallel Computing,* 18 November 2015, 374-382

- Automatic Ki-67 Counting Using Robust Cell Detection and Online Dictionary Learning. *IEEE Transactions on Biomedical Engineering,* 01 March 2014, vol. 61 (3